Europäisches Patentamt

European Patent Office

Office européen des brevets

(19)

(11) Publication number: **0 308 276**
**A2**

# EUROPEAN PATENT APPLICATION

(12)

(21) Application number: **88308670.4**

(22) Date of filing: **19.09.88**

(51) Int. Cl.⁴: **B 27 B 33/14**
**B 23 D 63/16**

(30) Priority: **17.09.87 US 97870**

(43) Date of publication of application:
**22.03.89 Bulletin 89/12**

(84) Designated Contracting States:
**CH DE FR GB IT LI SE**

(71) Applicant: **BLOUNT, INC.**
**5550 S.W. Macadam Avenue**
**Portland Oregon 97201 (US)**

(72) Inventor: **Petrovich, Michael V.**
**8706 N.E. Russell Portland**
**Oregon 97220 (US)**

**MacGavin, Donald J.**
**13160 S.W. Peters Lake Oswego**
**Oregon 97034 (US)**

(74) Representative: **Jones, Ian**
**POLLAK MERCER & TENCH High Holborn House 52-54**
**High Holborn**
**London WC1V 6RY (GB)**

(54) Saw chain cutting edge configuration.

(57) A cutting configuration for a hooded cutter of a saw chain cutting link wherein the face angles (a & b) of the side plate (20) and top plate (22) are substantially the same and more blunt than the "hook angle" (HA) formed by a round file. The "hook angle" is preferably formed at about a 30 degree angle and the "top plate angle" (b) at about a 25 degree angle.

FIG. I

EP 0 308 276 A2

**Description**

# SAW CHAIN CUTTING EDGE CONFIGURATION

This invention relates to the configuration of the cutting edges of a hooded cutter or cutter link of a saw chain.

Sawing, as accomplished by a chain saw cutting through a tree, involves removing material during the cutting process and thereby forming a kerf (a narrow trench) through the tree. Originally saws were formed with slitters and rakers, the slitters scoring the sides of the kerf and the rakers removing the material between the scored sides.

The development of the hooded cutter combined the slitting and raking functions into a single cutting tooth. The tooth was formed into an inverted L-shape with leading cutting edges. The lateral leg of the L (referred to as a top plate) provided the raking function. The corner and a small portion of the vertical leg (referred to as a side plate) provides the scoring function. This combination of cutting functions is accomplished by establishing the intersecting corner of the top and side plate cutting edges as a leading sharp point with the two cutting edges angled rearwardly in the direction away from the cutting point.

Over the years many improvements have been made to the basic concept of the hooded cutter, for example, both the top plate and the side plate are relief angled, that is, the plates themselves are slightly angled inwardly from front to back so as to avoid dragging of the plates along the kerf walls.

In addition to the relief angles and the angles of the top plate and side plate cutting edges, there is a third set of angles that must be considered. The top plate and side plate have thicknesses which form leading narrow front faces. The cutting edges of the top and side plates are formed at the outside edges of the front faces. The top plate and side plate front faces are angled back from the designated outer cutting edges to generate the sharpened cutting edges. The more acute the angles, the sharper the cutting edges. These angles are sometimes referred to as the top and side plate face angles.

All of the above angles contribute to the performance of the cutting chain. A combination of the angles that produces a highly aggressive cutting action will dig in too deeply, too quickly, and may cause kickback. A combination that produces inadequate or a non-aggressive cutting action will cut inefficiently, forcing the sawyer to work harder for less production.

It is consequently desirable to provide a combination of angles that optimises cutting efficiency, with acceptably low kickback potential.

The most common sharpening tool and the one that is the easiest to use by a sawyer is a round file (a long slim cylindrical file with sharpening teeth on its circumference and a handle affixed to one end). It is important to understand however that using a round filing tool to simultaneously form the cutting edges of both the side plate and top plate generates certain problems. These problems will become apparent from reference to the detailed description and drawings that follow but, typically, sharpening is accomplished by drawing the file across the forward edges of the lateral and vertical legs of the cutter link, at a chosen angle from the cutting point. This drawing or sharpening motion is forwardly directed, that is, the file is pushed along the cutting faces, from back to front to generate angles which are herein described as being laterally and downwardly angled in the rearward direction.

The positioning of the rounded filing surface relative to the cutting edges must be controlled. The circular segment of the file that engages the cutting point and extends back under that point during sharpening determines what is referred to as the cutter's "hook angle".

The top plate face angle is established by the "hook angle" setting and by the downward angle at which the file is drawn across the top plate face, which generates what is referred to as the "down angle". This "down angle" changes the top plate face angle progressively from a more blunt angle (adjacent the cutting point) to a more acute cutting edge toward the opposite end of the top plate face.

The angle of sharpening, laterally and rearwardly from the cutting point, establishes the side plate face angle, which is referred to as the "top plate angle".

A previous typical combination of filing angles (for example for a 72LP saw chain produced by the Oregon Saw Chain Division of Blount Inc.) provides for a "hook angle" of 15 degrees, a "top plate angle" of 30 degrees, and a "down angle" of 10 degrees.

It was commonly believed that increasing the "hook angle" would increase cutting efficiency but was a major factor effecting kickback potential. The "hook angle" was thus maintained at a low angle to generate an acceptably low kickback potential. The reduced cutting efficiency was offset at least in part by generating a somewhat acute side plate face angle (for example with a "top plate angle" of 30 degrees) and by providing the progressively more acute top plate face angle (for example with a "down angle" of 10 degrees).

Increasing the "hook angle" was not recommended by conventional wisdom because of kickback potential. Blunting the face angles was simply not considered as it was believed not to materially affect kickback potential but would materially reduce cutting efficiency. The present invention goes contrary to this conventional wisdom both by increasing the "hook angle" and by decreasing the face angles.

Although cutting efficiency is significantly affected by a change in the "down angle" (for example from 10 degrees to 0 degrees) when applied to a cutter having a low "hook angle" (for example 15 degrees), surprisingly, it was learned that the cutting efficiency is not materially affected by significant reduction in "down angle" applied to a cutter with a higher "hook angle" (to about 25-40 degrees, for example 30 degrees). In addition, the cutting efficiency is also improved by reducing the "top plate angle" (to about 20-30 degrees for example 25 degrees). More importantly, it was found that the kickback potential was reduced back to the original level or lower when the "top plate angle" and "down angle" were reduced. The result was a far more efficient cutting action without sacrifice of the desired low kickback potential.

The invention is further described below, by way of example, with reference to the accompanying drawings, in which:

Fig. 1 is a perspective view of a hooded cutter link with a round sharpening file illustrated in broken lines;

Fig. 2 is a top view of the cutter link of Fig. 1;

Fig. 3 is a side view of the cutter link;

Fig. 4 illustrates the cutter link cutting through wood such as in a log or tree;

Figs. 5a and 5b illustrate the effects of differently positioning a round file in generating a "hook angle";

Fig. 6 illustrates the filing action in producing the "down angle";

Figs. 7a and 7b, and Fig. 8 illustrate the effect of angular positioning of a round file in generating a "hook angle".

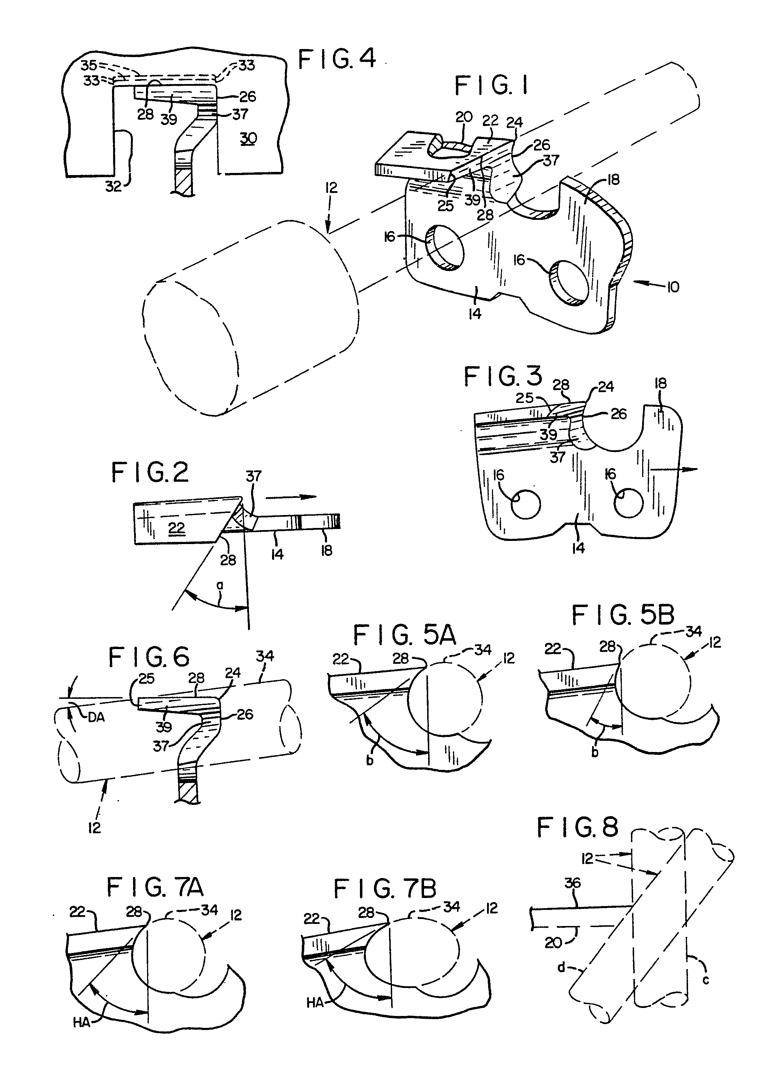

Fig. 1 illustrates a hooded cutting link 10 in perspective, with a round file 12, shown in broken lines, positioned for sharpening. The cutting link 10, as is typical of hooded cutters, ccmprises a main body portion 14 having rivet holes 16 for pivotal attachment to adjacent saw chain links, a depth gauge portion 18, and a cutter portion comprised of a side plate 20 and a top plate 22.

Referring now to Fig. 3, the top plate 22 and side plate 20 are sharpened at their leading edges to form an intersecting leading sharp point 24, a side plate cutting edge 26, and a top plate cutting edge 28.

To understand the problem of forming these cutting edges, it must first be appreciated that the two edges are cutting simultaneously, that is, the top plate cutting edge 28 is taking increasingly deeper bites into the wood 30 and the side plate cutting edge 26 is slicing along the kerf sides at corresponding increased cutting depths to co-operatively form the kerf 32. This action is illustrated in Fig. 4 with passes made by successive cutters illustrated in broken lines, the broken lines 33 being the scoring cuts of the side plate cutting edges and the broken lines 35 being the raking cuts of the top plate cutting edges.

The leading faces 37 and 39 of the side and top plates, provided by the plate thickness, must be angled or inclined rearwardly from the cutting edges 26 and 28 respectively in order to form the sharp cutting edges. The rearward angle of the leading face 37 (the face angle) of the side plate is indicated in the top view of Fig. 2 as angle a. The angle a is dictated by the back angle of the top plate cutting edge 28 which is referred to as the "top plate angle". The leading face 37 is curved vertically but the face angle along the curve is consistently angle a as appears also from Fig. 1.

The rearward angle or face angle of the leading face 39 of the top plate is dictated by a more complex set of factors and will be explained by reference to Figs. 5a, 5b and 6. Compare Figs. 5a and 5b and note from Fig. 5a that a sharper edge with a less acute face angle b is achieved if the file 12 is positioned so that the apex 34 of the file is placed in close proximity with the cutting edge 28; raising the apex as in Fig. 5b creates a blunter edge with a more acute face angle b. Now refer to Fig. 6 and note the effect of sharpening the top plate face angle with the file axis at a "down angle" DA for example, of 10 degrees. The apex 34 is varied in its relationship to the cutting edge 28 to vary the angle b from a blunt face angle near intersecting point 24 to a more acute angle at the opposite end 25 of the face 39.

The "hook angle" HA is considered to be the angle of downward and rearward slope of the side plate cutting edge formed by the intersection of the round file 12 and the plane 36 which is the outer surface of the side plate 20 (see Fig. 8). Now, referring also to Fig. 7a, note that if file 12 is directed at a 90 degree filing angle (position c of Fig. 8), the configuration of the hook angle HA is a segment of the circular cross section of the file. However, if filed at an angle d (Fig. 8) the configuration of the hook angle HA is a segment of an ellipse and is far more acute, as indicated in Fig. 7b.

The hook angle HA is thus affected by both the proximity of the file apex 34 to the cutting edge 28 at the corner 24 and the top plate angle a.

Referring now to the present invention, it is believed that an error was heretofore undetected in the "conventional wisdom" of developing a cutter configuration. A severe "hook angle" does indeed cause a more aggressive cutting action. However, kickback potential is generated by allowing the cutter to dig in beyond its capability to cut through the wood, causing abrupt stopping of the cutter in the cut. Providing a blunt "hook angle" does indeed control kickback potential but does so at an unnecessary sacrifice of cutting performance. Control in this case is provided by simply reducing cutting capability.

The present invention corrects this error by dramatically altering the relationship of the angles. The "top plate angle" is changed to establish a reduced but acceptable side plate angle of 25 degrees, thus also reducing the ellipse effect on the hook angle. The hook angle is changed to 30 degrees by lowering the position of the file apex 34 relative to the cutting point 28. This "hook angle" is determined by drawing a line from the cutting point to a point on the side plate cutting edge 0.031 cm. (.020 inch) below the cutting point. The "down angle" is reduced to 0 degrees thus creating a consistent top plate cutting edge angle of about 25 degrees.

It is theorized, although the invention is not to be limited by this theory, that the cutting edges should be equalized in order to optimise cutting performance. Controlling kickback potential through "hook angle" only, creates an inefficient cutter, as tests and experience have now proved. The provision of a blunt "hook angle" and thereby a partially blunt top plate face angle, creates an imbalance of cutting effectiveness. By reducing the side plate face angle and eliminating the "down angle", the ellipse effect is moderated and the top plate face angle is made consistent over its length. However without increasing the "hook angle" (from what was previously acceptable) the entire top plate cutting edge is unacceptably and unnecessarily blunt. Increasing the "hook angle" to generate an acceptable face angle for the top plate, for example, similar to the side plate face angle, but not greater than that acceptable for kickback potential, generates the optimum cutter.

Those familiar with the art will, upon review of the foregoing explanation, develop numerous variations and modifications, all based on the new found appreciation that a substantial "hook angle" can be tolerated by moderating that equalizing the cutting edges. The scope of the invention is thus defined by the claims appended hereto.

**Claims**

1. A hooded cutter link (10) comprising a side plate (20) and a top plate (22) intersecting to form an L-shaped cutting configuration, wherein the side plate and top plate each have a leading front face (37 & 39) formed by the plate thickness, the outside edges of the side plate front face and the top plate front face form respective leading cutting edges (26 & 28) provided by the angling of the faces inwardly and rearwardly of the cutting direction, the intersection of the leading cutting edges forms a leading cutting point (24), each of the cutting edges is angled rearwardly away from the cutting point, the combination of the angles have been formed by the linear sharpening action of a sharpening tool drawn across the top plate cutting edge (28) in a manner whereby the top plate face angle (b) is consistent across the length of the top plate cutting edge (28) whereby the rearward angle of the top plate cutting edge generates the side plate face angle (a) and whereby the top plate face angle (b) generates the rearward angle of the side plate cutting edge, and the side plate face angle (a), the top plate cutting edge angle, and the top plate face angle (b) are substantially similar, to thereby equalize the cutting capability across the cutting edges.

2. A hooded cutter link as claimed in claim 1 wherein the side plate cutting edge angle is more acute than the face angles.

3. A hooded cutter link as claimed in claim 1 or 2 wherein the side plate cutting edge angle generates a hook angle (HA) in a range of about 25-40°.

4. A hooded cutter link comprising a side plate (20) and a top plate (22) intersecting to form an L-shaped cutting configuration, the side plate and top plate having respective leading front faces (37 & 39) formed by the plate thickness, and respective leading cutting edges (26 & 28) at the outside edges of the front faces, the leading cutting edges being provided by the angling of the faces inwardly and rearwardly of the cutting direction, the intersection of the leading cutting edges forming a leading cutting point (24) and each of the cutting edges being angled rearwardly away from the cutting point, the combination of the angles being formed by a round filing surface in a linear filing action extended along the length of the top plate cutting edge (28) and through the intersection with the side plate cutting edge (26), and the filing surface forming a hook angle (HA) beneath the cutting point and extended along the side plate edge in a range of about 25-40 degrees and a top plate angle (b) in a range of about 20-30 degrees, the top plate angle being substantially consistent throughout its length.

5. A hooded cutter link as claimed in claim 3 or 4 wherein the hook angle is about 30 degrees.

6. A hooded cutter link as claimed in any preceding claim wherein the top plate angle is about 25 degrees.

7. A sharpening process for forming a cutting edge configuration for a hooded cutter the cutter comprising a top plate (22) and a side plate (20) having leading front faces (39 & 37) with face angles forming leading cutting edges (28 & 26) that intersect to form a cutting corner, the sharpening process comprising the steps of engaging the top plate leading face (39) with a rounded sharpening surface, and moving the rounded sharpening surface linearly along the leading face and through the intersection with the side plate face (37), the rounded sharpening surface being directed at a linear sharpening direction angled relative to the cutting direction of the cutter to simultaneously form the rearwardly directed top plate cutting edge (28) and the rearwardly directed side plate cutting edge (26) at the outside edges of the respective top plate and side plate faces, and to further simultaneously form the leading cutting point and a hook angle under the cutting point, the linearly directed sharpening surface being further directed along the top plate face to provide a consistent top plate face angle across its length substantially similar in configuration to the side plate face angle.

8. A sharpening process as claimed in claim 7 wherein the rounded sharpening surface forms the hook angle in the range of about 25-40 degrees and the top plate angle in the range of about 20-30 degrees.

9. A sharpening process as claimed in claim 7 or 8 wherein the rounded sharpening surface forms the hook angle at about 30 degrees.

10. A sharpening process as claimed in claim 7, 8 or 9 wherein the rounded sharpening surface forms the top plate angle of about 25 degrees.

FIG. 4

FIG. 1

FIG. 3

FIG. 2

FIG. 6

FIG. 5A

FIG. 5B

FIG. 7A

FIG. 7B

FIG. 8